# EUROPÄISCHE PATENTANMELDUNG

(11) **EP 1 146 575 A1**
(43) Veröffentlichungstag der Anmeldung: **17.10.2001**
(21) Anmeldenummer: 00108104.1
(22) Anmeldetag: 13.04.2000
(51) Int. Cl.: H01M 2/12, H01M 10/50, H01M 2/36

(54) **Verfahren und Vorrichtung zur Kühlung, Wasserstoff- und Aerosolbeseitigung von galvanischen Elementen**

(71) Anmelder: HAWKER GmbH, 58089 Hagen (DE)
(72) Erfinder: Woeffler Friedrich, 61389 Schmitten/Ts (DE); Werth Ewald, 58093 Hagen (DE)
(74) Vertreter: Köchling, Conrad-Joachim

(57) **Zusammenfassung**

Um ein Verfahren zur Kühlung von galvanischen Elementen oder von aus diesen verschalteten Batterien während der Zellformation/Batterieformation oder zur schnellen Inbetriebsetzung trocken vorgeladener Zellen oder Batterien oder zur Kühlung von galvanischen Elementen oder von aus diesen verschalteten Batterien während der elektrischen Aufladung oder Umladung, wobei die Elemente bzw. die daraus verschalteten Batterien ein Gehäuseteil aufweisen, in dem die galvanischen Elektroden oder Plattenblöcke angeordnet sind und das zur Aufnahme der Batteriesäure dient, zu schaffen, mit dessen Hilfe eine schnell und kostengünstige Inbetriebsetzung trocken vorgeladener Zellen und Batterien ermöglicht ist, wobei zudem auch eine schnelle und kostengünstige Aufladung oder Umladung von Batterien ermöglicht sein soll, wird vorgeschlagen, daß in das Gehäuse in den Gasraum oberhalb der maximalen Säurefüllhöhe Luft, insbesondere Umgebungsluft, oder ein nicht reaktives Gas oder ein Inertgas eingeleitet und aus dem Gehäuse wieder abgeleitet wird, wobei mittels der Luft- oder Gasströmung die Kühlung der jeweiligen Zelle auf eine Solltemperatur erfolgt.

## Beschreibung

Die Erfindung betrifft Verfahren zur Kühlung von galvanischen Elementen oder von aus diesen verschalteten Batterien während der Zellformation/Batterieformation oder zur schnellen Inbetriebsetzung trocken vorgeladener Zellen oder Batterien oder zur Kühlung von galvanischen Elementen oder von aus diesen verschalteten Batterien während der elektrischen Aufladung oder Umladung, wobei die Elemente bzw. die daraus verschalteten Batterien ein Gehäuseteil aufweisen, in dem die galvanischen Elemente angeordnet sind und das zur Aufnahme der Batteriesäure dient.

Ferner betrifft die Erfindung ein Verfahren zur Kühlung, Wasserstoff- und Aerosolbeseitigung von galvanischen Elementen oder aus diesen verschalteteten Batterien während der Zellformation/Batterieformation bzw. zur schnellen Inbetriebsetzung trocken vorgeladener Zellen und Batterien mit einem Gehäuseteil, in dem die galvanischen Elemente angeordnet sind und das zur Aufnahme der Batteriesäure dient.

Ferner betrifft die Erfindung eine Vorrichtung zur Durchführung des Verfahrens, insbesondere zur Kühlung und/oder Wasserstoff- und Aerosolbeseitigung von galvanischen Elementen oder aus diesen verschalteten Batterien während der Zellformation/Batterieformation bzw. zur schnellen Inbetriebsetzung trocken vorgeladener Zellen und Batterien oder bei der Aufladung oder Umladung von Batterien mit einem Gehäuseteil, in dem die galvanischen Elemente angeordnet sind und das zur Aufnahme der Batteriesäure dient.

Bei der im Stand der Technik bekannten Methode Batterien oder Zellen zu laden, wird der Wasserstoff und das Aerosol in den Formations- oder Laderaum abgegeben und erst dann dort durch Absaugen aus diesem Raum und gleichzeitiger Zugabe von Frischluft ständig verdünnt.

Bei relativ großem Raumvolumen im Vergleich zum Abluftvolumenstrom führt dies zu einem Gleichgewicht bei ca. 1mg Schwefelsäureaerosole pro m³ Luft, was zukünftig nicht mehr den behördlichen Anforderungen genügen wird.

Seit 1999 existiert ein Entwurf der DFG beziehungsweise der UHV, die maximale Arbeitsplatzkonzentration (MAK) für Schwefelsäureaerosole in Luft von derzeit 1,0 mg pro m³ auf 0,1 mg pro m³ zu reduzieren. Um eine solch niedrige Konzentration in der Luft zu unterschreiten, müßten dann gewaltige Luftmengen mit entsprechend großen Absaugleistungen installiert und betrieben werden. Neben hohen Investitions- und Energiekosten für die Absaugung selbst muß außerdem die ebenso große Luftmenge als Zuluft gefiltert und bei niedrigen Außentemperaturen beheizt werden.

Heute wird die Abluftmenge bei Formationsbeziehungsweise Ladeeinrichtungen in der Bleibatterieindustrie durch den beim Überladen entstehenden Wasserstoff nach einer Verdünnungsformel mit entsprechenden Sicherheitsfaktoren bestimmt. Die so ermittelte Abluftmenge ist allerdings bei weitem nicht in der Lage die beim Formieren beziehungsweise Laden von Bleibatterien freiwerdenden Aerosole auf weniger als 0,1 mg Schwefelsäure pro m³ Luft zu senken.

Ein weiteres besonders wichtiges Problem bei der Batterie- beziehungsweise Zellformation oder auch der schnellen Inbetriebsetzung trocken vorgeladener Bleibatterien ist die Ableitung der beim Formieren bzw. in Betrieb setzen dieser Batterien oder Zellen entstehende Abwärme. Es ist bekanntlich sehr schwer, diese Wärme aus dem Zellcontainer zu entfernen, da das Zellgehäuse aus schlecht leitendem Kunststoff beachtlicher Dicke besteht. Um die Temperatur in den Zellen auf weniger als 55°C zu halten, werden die Zellen zum Zwecke der Kühlung auf Abstand in rückgekühlte Wasserbäder gestellt oder ständig mit Luft angeblasen. Gleichzeitig wird der Ladestrom so klein gehalten, daß nicht mehr Wärme entsteht, als über oben genannte Kühlmethoden abgeführt werden kann. Dies hat jedoch zur Folge, daß die Formationszeit solcher Zellen üblicherweise mindestens 3 und mehr Tage beträgt. Noch problematischer ist die sehr kostengünstige Batterieformation, das heißt unformierte Zellen sind bereits eng an eng in einem Batterietrog auslieferungsfertig verschaltet und bedürfen nur noch der Formation. Hier ist allerdings das thermische Problem ohne Zwangskühlung fast unlösbar. Die inneren Zellen der Batterie haben in ihrer unmittelbaren Nachbarschaft ebenfalls wärmeproduzierende Zellen, die keine Wärme mangels Temperaturgradient aufnehmen können.

Als Wärmetauschfläche steht somit nur der relativ kleine Zelldeckel und in geringem Maße der Zellboden zur Verfügung. Hier kann bisher nur über eine Zwangskühlung über den Austausch der warmen durch gekühlte Säure eine Batterieformation durchgeführt werden. Außerdem muß bereits beim Befüllen häufig stark vorgekühlte Säure aus thermischen Gründen verwendet werden, was zusätzlichen Aufwand bedeutet.

Das Problem der Wärmeentwicklung spielt aber nicht nur bei der Formation eine wesentliche Rolle, sondern auch beim Umladen und Aufladen von Batterien, da während der elektrischen Aufladung oder Umladung ebenfalls hohe Temperaturen entstehen, die über 55°C ansteigen, was zu den vorgenannten Problemen führt.

Ausgehend von diesem Stand der Technik liegt der Erfindung die Aufgabe zugrunde, ein Verfahren und eine Vorrichtung zur Durchführung des Verfahrens zu schaffen, mit dessen Hilfe eine schnelle und kostengünstige Inbetriebsetzung trocken vorgeladener Zellen und Batterien ermöglicht ist, wobei zudem auch eine schnelle und kostengünstige Aufladung oder Umladung von Batterien ermöglicht sein soll.

Zur Lösung dieser Aufgabe wird vorgeschlagen, daß in das Gehäuse in den Gasraum oberhalb der maximalen Säurefüllhöhe Luft, insbesondere Umgebungsluft, oder ein nicht reaktives Gas oder ein Inertgas eingeleitet und aus dem Gehäuse wieder abgeleitet wird, wobei mittels der Luft- oder Gasströmung die Kühlung der jeweiligen Zelle auf eine Solltemperatur erfolgt.

Bevorzugt kann dabei vorgesehen sein, daß die Luft oder das Gas in die jeweilige Zelle mit Überdruck eingespeist wird.

Desweiteren kann bevorzugt vorgesehen sein, daß die Luft oder das Gas durch die jeweilige Zelle gesaugt wird.

Die verfahrensmäßig ausgetauschte Luft ersetzt ständig feuchte Luft über dem Elektrolyt durch trockenere Umgebungsluft und entfernt damit die im Wasserdampf enthaltene Verdampfungswärme aus der Zelle. Gleichzeitig wird durch die heftige Strömung die Grenzschichtdicke zwischen Elektrolyt und Luft reduziert, was die weitere Verdampfung von Wasser begünstigt und so zu höherem Wärmeaustrag führt. Da der Dampfdruck über einer wäßrigen Flüssigkeit mit steigender Temperatur exponentiell steigt, führt die höhere Verdampfungsrate bei wärmeren Zellen zu höherer Kühlleistung, was eine Temperaturvergleichsmäßigung unter den Zellen bewirkt. Dieser gewünschte Effekt neutralisiert weitgehend den bei Batterien ohne Zwangskühlung auftretenden großen Temperaturunterschied zwischen äußeren und inneren Zellen der Batterie. Neben der sehr großen Verdampfungswärmemenge des abgeführten Wassers trägt die ausgetauschte Luft auch durch Übernahme von Molekularbewegung beim Kontakt mit den Polbrücken und dem Elektrolyten Wärme aus der Zelle.

Um auch bei der schnellen und kostengünstigen Inbetriebsetzung von trocken vorgeladenen Zellen oder Batterien oder während der Zellformation/Batterieformation die Konzentration von Wasserstoff und Aerosolen in der Umgebungsluft niedrig zu halten, schlägt die Erfindung vor, daß in das Gehäuse in den Gasraum oberhalb der maximalen Säurefüllhöhe Luft, Gas oder Umgebungsluft eingeführt wird und das Mischgas aus Luft, Gas oder Umgebungsluft und den über dem galvanischen Element oder in der Batterie oberhalb der Elektrolytflüssigkeit entstandenen Gasen und Aerosolen abgesaugt und gegebenenfalls gereinigt und gefiltert wird und daß durch die Luftströmung und Absaugung der Gase und Aerosole die Zelle / Batterie gekühlt wird.

Vorrichtungsmäßig wird die eingangs gestellte Aufgabe dadurch gelöst, daß das Gehäuse im Gasraum oberhalb der maximalen Säurefüllhöhe eine Gas- oder Luftzufuhröffnung und eine Gasabsaugleitung aufweist, wobei die Luftzufuhröffnung der Zuführung von Gas, Luft oder Umgebungsluft dient und die Gasabsaugleitung zur Absaugung der Mischgase, bestehend aus Zuluft und den in der über dem galvanischen Element oder in der Batterie oberhalb der Elektrolytflüssigkeit entstandenen Gasen und Aerosolen dient, so daß durch die erzeugte Luftströmung / Absaugung der Mischgase und Aerosole eine Kühlung der Zelle / Batterie eintritt.

Dabei ist bevorzugt, daß die Vorrichtung mindestens einen Stopfen mit einer Zuführleitung aufweist, der der Zuführung von Gas, Luft oder Umgebungsluft dient, der an oder auf einer Öffnung des Gehäuseteils befestigt oder befestigbar ist, und mindestens einen weiteren Stopfen mit einer Abführleitung, der der Absaugung der in der über dem galvanischen Element oder in der Batterie oberhalb der Elektrolytflüssigkeit entstandenen Mischgase dient, wobei die Mündung der Stopfen oberhalb der maximalen Füllhöhe der jeweiligen Zelle oder der Batterie angeordnet ist.

Besonders bevorzugt ist, daß die beiden Stopfen der Vorrichtung zu einem Stopfen zusammengefaßt sind, der sowohl eine Zuführleitung als auch eine Abführleitung aufweist, der an oder auf einer Öffnung des Gehäuseteils befestigt oder befestigbar ist.

Ein erfindungsgemäßer Stopfen bietet die Möglichkeit, die Erstbefüllung mit der Formationssäure unter ständiger Luftkühlung durchzuführen, wodurch keine vorgekühlte Säure verwendet werden muß.

Weiter ist besonders bevorzugt vorgesehen, daß eine oder mehrere der Zuführ- und / oder Abführleitungen mit einem Regelkörper, insbesondere mit einem Durchflußregulator, versehen sind.

Darüberhinaus ist besonders bevorzugt vorgesehen, daß zwischen der Zuführleitung und der Abführleitung ein Bypass angeordnet ist, dessen Durchflußquerschnitt mittels eines Durchflußregulators einstellbar ist.

Durch die veränderbare Voreinstellung können die Gasströme ganz oder teilweise über den Elektrolyten beziehungsweise im Bypass geleitet werden oder durch den Einsatz von Blenden kann die Kühlleistung an das jeweilige Ladeschema und auch an die Zellgröße angepaßt werden.

Zudem ist bevorzugt vorgesehen, daß eine oder mehrere der Zuführ- oder Abführleitungen aus einem säureunempfindlichen, vorzugsweise klarsichtigen Kunststoff gebildet ist.

Dabei ist besonders bevorzugt vorgesehen, daß der Stopfen, insbesondere dessen Abführleitung, in einem dem Gehäuseteil nahen Außenbereich klarsichtig ausgebildet ist.

Die klarsichtige Ausbildung dient der Beobachtung mitgerissener Säuretropfen als Indikator für das Erreichen des oberen Füllstandes. Über diese Einrichtung kann in regelmäßigen Abständen der Wasserverlust ohne Ziehen eines Stopfens ausgeglichen werden.

Weiterhin ist bevorzugt vorgesehen, daß die Abführleitung an eine Abgasabsaugungs- und eine Abgasreinigungsanlage angeschlossen ist.

Die gezielte Absaugung über den erfindungsgemäßen Stopfen ermöglicht die fast 100 %ige Fernhaltung des Knallgases und der Säureaerosole aus dem Formations- beziehungsweise Laderaum, auch wenn der Stopfen auf minimale Kühlung eingestellt ist. Außerdem reduziert die erfindungsgemäße Ausbildung die üblicherweise hohe Knallgaskonzentration im Gasraum herkömmlich formierter Zellen. Diese Eigenschaft trägt auch niedrigeren MAK-Werten für Schwefelsäure in Luft Rechnung.

Schließlich ist bevorzugt vorgesehen, daß zwischen der gehäuseseitigen Mündung der Zuführleitung und Abführleitung ein Trennteil, beispielsweise eine Trennwand, vorgesehen ist.

Durch die erfindungsgemäße Ausbildung des Stopfens mit einem Trennteil wird ein direktes Absaugen der zugeführten Luft in den Abgasstutzen verhindert, und somit das Abführen der entstandenen Gase sicherstellt.

Bevorzugt ist ferner vorgesehen, daß das Gehäuseteil in seinem von den Polen der Batterie durchgriffenen Deckel Diagnoseöffnungen im Bereich der einzelnen Zellen aufweist, und daß die Zuführ- und Abführleitung aufweisende Stopfen in die Diagnoseöffnungen eingesetzt sind.

Die üblicherweise vorgesehenen Diagnoseöffnungen, die durch Verschlußstopfen verschlossen sind, können zur Anordnung der Stopfen genutzt werden, in dem die Verschlußstopfen entfernt und anstelle dessen die entsprechenden Stopfen eingesetzt werden. Eine konstruktive Änderung der Batterie bzw. des Batteriegehäuses ist demzufolge für die erfindungsgemäße Anwendung nicht erforderlich.

Um die Handhabung zu vereinfachen, kann auch vorgesehen sein, daß an einer Haltevorrichtung eine Anzahl von Stopfen gehaltert sind, die bezüglich der Anzahl und Anordnung der Anzahl und Anordnung der Diagnoseöffnungen einer Batterie entsprechen, und daß die Haltevorrichtung auf die Batterie aufsetzbar ist, so daß die Stopfen in die Diagnoseöffnungen eingreifen.

Auf diese Weise können beispielsweise für eine bestimmte Batterietype oder auch für mehrere derartige Batterietypen, die nebeneinander angeordnet sind, Stopfen in der Haltevorrichtung untergebracht werden, die dann durch Aufsetzen der Haltevorrichtungen auf die Batterie oder Batterien in die entsprechenden Öffnungen eingreifen und so die Durchströmung der Batterien mit Luft zu dem oben angegebenen Zweck in einfacher Weise ermöglichen.

Bevorzugt kann dabei auch vorgesehen sein, daß die Abführleitungen der Stopfen an eine Sammelleitung angeschlossen sind, die mit einer Absaugvorrichtung gekoppelt ist.

Eine besonders bevorzugte Weiterbildung wird darin gesehen, daß der Stopfen aus einem ringförmigen Unterteil und einem stutzenartigen, in das Unterteil einsteckbaren Oberteil besteht, wobei im Unterteil diametral die Trennwand angeordnet ist, die sich parallel zur Ringachse des Unterteils einerseits über die gehäuseinnenliegende Mündung des Unterteils vorragend und andererseits bis zum in das Unterteil eingesteckten Ende des Oberteils erstreckt, daß das Oberteil außermittig einerseits einen Stutzen zum Anschluß der Abführleitung und andererseits die Öffnung aufweist, die als Zuführleitung dient, und daß das Oberteil der drehbar im Unterteil gehaltert ist.

Durch diese Ausbildung ist es in einfacher Weise möglich, den Luftstrom bei konstanter Luftzuführung oder Luftabsaugung zu variieren, in dem das Oberteil relativ zum Unterteil gedreht wird, so daß entweder die Trennwand zwischen der Mündung der Abführleitung und der Zuführleitung des Unterteils angeordnet ist, so daß die gesamte Luftströmung in die entsprechende Zelle eingeleitet und über die Abführleitung wieder abgeleitet wird. Alternativ ist es auch durch Drehung des Unterteils möglich, die Öffnungen für die Abführleitung und Zuführleitung relativ zur Trennwand so anzuordnen, daß nur ein Teil der zugeführten Luft in die entsprechende Zelle einströmt und ein Teil dieser Luft direkt zur Abführleitung geführt wird. Durch eine derartige Anordnung und Ausbildung ist es möglich, bei konstanter Luftzuführung in Abhängigkeit von der entstehenden Wärme beim Neuformatieren oder beim Umladen oder Aufladen die Luftmenge einzustellen, um eine zu weite Abkühlung zu vermeiden und das geeignete Temperaturlevel von ca. 55° C einzuhalten. Ein solcher Stopfen ist besonders geeignet, bei bisher üblichen Batterien und Zellen Verwendung zu finden, ohne daß der konstruktive Aufbau der Batterie oder des Batteriegehäuses verändert werden müßte.

Ein Ausführungsbeispiel der Erfindung ist in der Zeichnung dargestellt und im folgenden näher beschrieben.

Es zeigt:
- Fig. 1: einen Ausschnitt einer Batterie in erfindungsgemäßer Ausbildung im Schnitt gesehen
- Fig. 2: eine besondere Ausführungsform eines Stopfens in Seitenansicht, teilweise geschnitten;
- Fig. 3: das Unterteil des Stopfens in Unteransicht in Richtung des Pfeiles III in Figur 2 gesehen;
- Fig. 4: das Oberteil des Stopfens von unten gesehen in Richtung des Pfeiles IV der Figur 2;
- Fig. 5: einen Stopfen insgesamt in Ansicht gesehen;
- Fig. 6: den Stopfen von oben gesehen;
- Fig. 7 bis 10: unterschiedliche Ausrichtung des Stopfenunterteils relativ zum Stopfenoberteil jeweils in Draufsicht schematisch dargestellt.

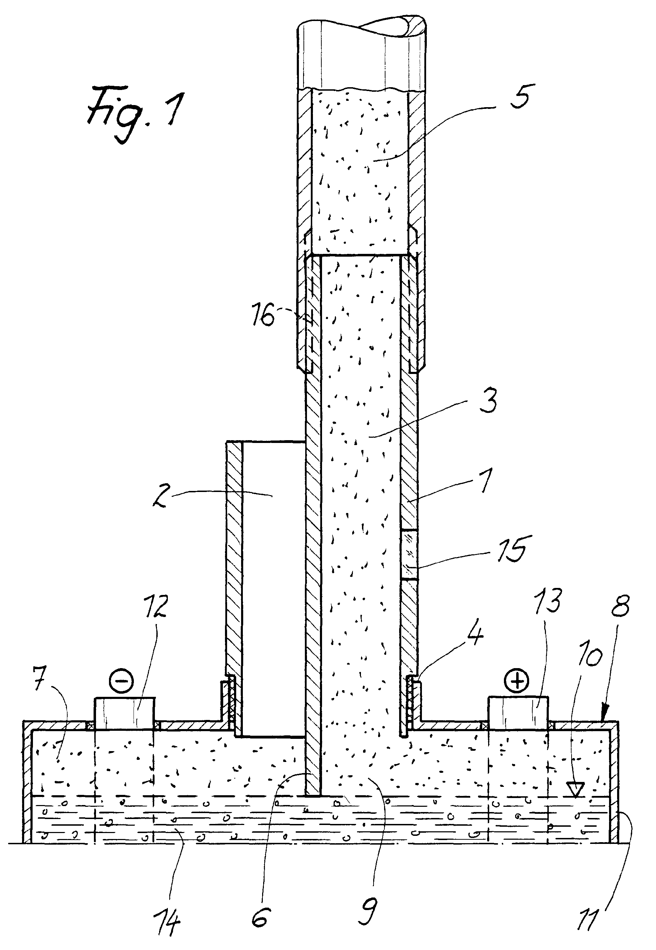

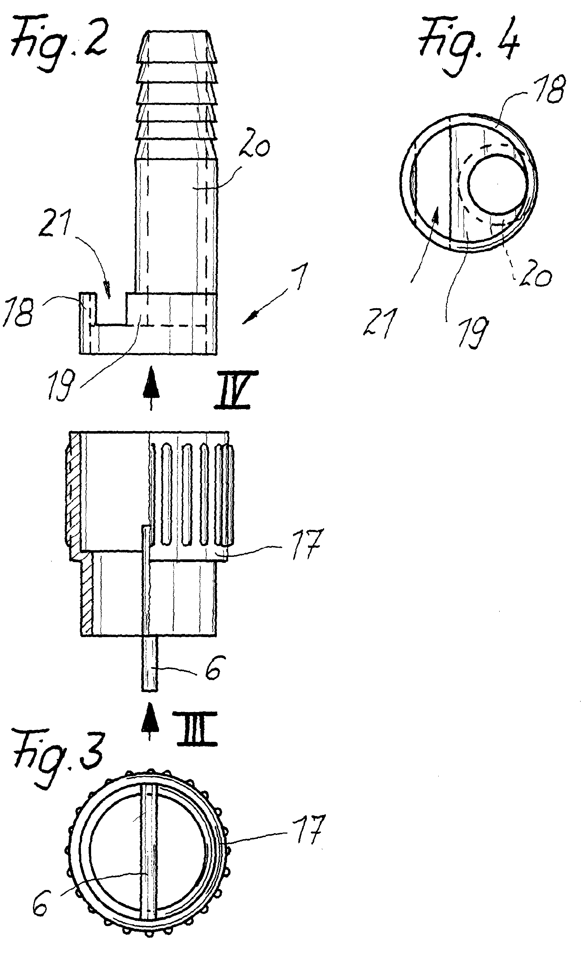

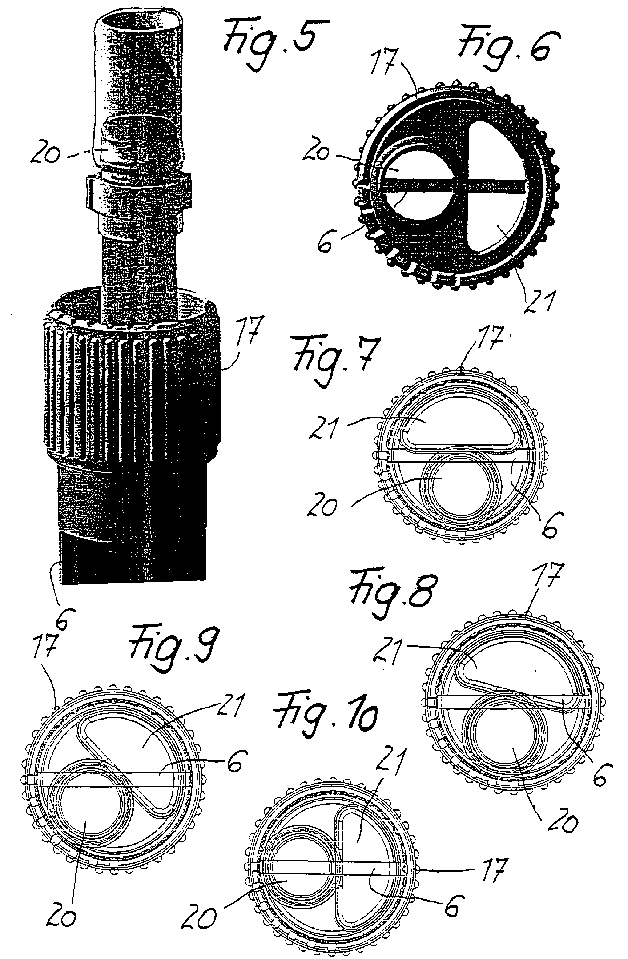

Im Ausführungsbeispiel gemäß Figur 1 ist eine Vorrichtung zur Durchführung des erfindungsgemäßen Verfahrens gezeigt. Hierbei erfolgt eine Kühlung sowie Wasserstoff- und Aerosolbeseitigung aus dem Gasraum von galvanischen Elementen oder aus diesen verschalteten Batterien während der Zellformation/Batterieformation oder auch während der Umladung oder Aufladung von Batterien. Auch dient eine solche Anordnung zur schnellen Inbetriebsetzung trocken vorgeladener Zellen oder Batterien mit einem Gehäuseteil 11, in dem die galvanischen Elemente angeordnet sind und das zur Aufnahme von Batteriesäure 14 dient. Das Gehäuse 11 weist einen schematisch dargestellten Deckel auf, der von den Polen 12 und 13 durchgriffen ist, wobei der Deckel zusätzlich eine Diagnoseöffnung (bei 4) aufweist. In die Diagnoseöffnung 4 ist ein Stopfen 1 eingesetzt, der eine Zuführleitung 2 für Luft und eine Abführleitung 3 für Mischgas aufweist. Vorzugsweise ist die Abführleitung 3 mit einer Absauganlage 5 verbunden, wobei vorzugsweise die in den Gasraum 7 des Gehäuses 11 mündende Zuführleitung 2 und die Abführleitung 3 durch eine Trennwand 6 abgegrenzt sind, die zwischen den gehäuseinnenliegenden Mündungen dieser Leitungen angeordnet ist. In dem Gehäuse 11 sind mehrere galvanische Elektroden oder Plattenblöcke angeordnet, die jeweils miteinander verbunden sind und insgesamt wiederum mit den positiven und negativen Polen 12, 13 verbunden sind. Im Sollzustand wird das Gehäuse 11 bis zu einer maximalen Füllhöhe, die bei 10 angegeben ist, mit Batteriesäure gefüllt, wobei sich in dem Gehäuse 11 oberhalb der maximalen Füllhöhe der Batteriesäure ein Gemisch aus Wasserdampf, Wasserstoff und Elektrolytaerosolen, wie bei 9 veranschaulicht, bildet. Durch die Zuführleitung 2 des Stopfens 1 kann Umgebungsluft in den Gasraum 7 der jeweiligen Zelle 8 einströmen, wobei diese Luft zusammen mit dem Wasserdampf, dem Wasserstoff und den Elektrolytaerosolen durch die Abführleitung 3 mittels der Absauganlage 5 abgesaugt wird, wobei beim Ausführungsbeispiel auf einen Stutzen der Abführleitung 3 bei 16 ein Schlauch als Anschlußleitung angebracht ist, der zur Absauganlage 5 führt. Auf diese Weise ist es möglich, die in dem Element 8 im Gasraum 7 entstandenen Gefahrstoffe, wie Knallgas und Elektrolytaerosole, zusammen mit dem für die Kühlung des Elementes wesentlichen Wasserdampf einer Abgasreinigungsanlage zuzuführen. Durch die gezielte Luftführung in jeder einzelnen Zelle ist eine äußerst effektive Kühlung und Entfernung von schädlichen Bestandteilen erreicht, wobei insbesondere bei der Entfernung von Aerosolen und dergleichen eine Abgasreinigungsanlage erforderlich ist, um die entsprechenden Gefahrstoffe zu beseitigen. Der Stopfen 1, der in Figur 1 nur schematisch gezeigt ist, weist vorzugsweise einen Aufbau auf, wie er anhand der Darstellungen gemäß Fig. 2 bis Fig. 10 erläutert ist. Demzufolge besteht der Stopfen 1 aus einem ringförmigen Unterteil 17 und einem stutzenartigen, in das Unterteil 17 einsteckbaren Oberteil 18. Um eine Einstecktiefenbegrenzung zu bilden, ist das Unterteil 17 abgestuft, wie insbesondere in Figur 2 ersichtlich, so daß das Oberteil mit seinem eingeschobenen Ringelement gegen diese Anschlagschulter angelegt werden kann. Das Unterteil 17 weist eine den freien Querschnitt durchkreuzende diametral angeordnete Trennwand 6 auf, die an die Innenumfangswandung des stutzenartigen Endes des Unterteils 17 angeschlossen ist und zwei halbkreisförmige Durchströmungsräume beläßt, die voneinander durch die Trennwand 6 getrennt sind. Die Trennwand 6 ragt dabei über das untere Ende des Unterteils 17 vor, wie dies auch aus einem Vergleich mit der Figur 1 zu ersehen ist. Das andere Ende der Trennwand 6 ragt in den oberen Bereich des Unterteils 17 soweit vor, daß bei aufgestecktem Oberteil 18 dieses mit einer Wandung 19 an dem stirnseitigen Ende der Trennwand 6 anliegt. Das Oberteil 18 weist außermittig einen Stutzen 20 als Abführleitung 3 und zum Anschluß eines entsprechenden Schlauches auf. Daneben ist wiederum außermittig eine Öffnung 21 vorgesehen, die als Zuführleitung 2 dient. Die Zusammenbaulage von Unterteil 17 und Oberteil 18 ist in Figur 5 in Ansicht gezeigt. Je nach gewünschtem Luftdurchsatz ist es möglich, das Oberteil 18 relativ zu dem die Trennwand 6 tragenden Unterteil 17 zu drehen, so daß entweder durch die Trennwand 6 die Strömungsbereiche 20 und 21 voneinander getrennt sind, wie in Figur 7 ersichtlich ist, oder eine teilweise oder vollständige Überschneidung der Bereiche erreicht wird, wie in den Figuren 8 bis 10 und Figur 6 gezeigt, so daß quasi ein Bypass gebildet ist. Auf diese Weise ist es möglich, die Luftdurchsatzmenge bei konstanter Luftzuführung oder konstanter Luftabsaugung zu variieren, in dem das Oberteil 18 zum Unterteil 17 entsprechend verdreht wird.

Die Erfindung ist nicht auf das Ausführungsbeispiel beschränkt, sondern im Rahmen der Offenbarung vielfach variabel.

Alle neuen, in der Beschreibung und/oder Zeichnung offenbarten Einzel- und Kombinationsmerkmale werden als erfindungswesentlich angesehen.

## Patentansprüche

1. Verfahren zur Kühlung von galvanischen Elementen oder von aus diesen verschalteten Batterien während der Zellformation/Batterieformation oder zur schnellen Inbetriebsetzung trocken vorgeladener Zellen oder Batterien oder zur Kühlung von galvanischen Elementen oder von aus diesen verschalteten Batterien während der elektrischen Aufladung oder Umladung, wobei die Elemente bzw. die daraus verschalteten Batterien ein Gehäuseteil aufweisen, in dem die galvanischen Elektroden oder Plattenblöcke angeordnet sind und das zur Aufnahme der Batteriesäure dient,
**dadurch gekennzeichnet, daß** in das Gehäuse in den Gasraum oberhalb der maximalen Säurefüllhöhe Luft, insbesondere Umgebungsluft, oder ein nicht reaktives Gas oder ein Inertgas eingeleitet und aus dem Gehäuse wieder abgeleitet wird, wobei mittels der Luft- oder Gasströmung die Kühlung der jeweiligen Zelle auf eine Solltemperatur erfolgt.

2. Verfahren nach Anspruch 1,
**dadurch gekennzeichnet, daß** die Luft oder das Gas in die jeweilige Zelle mit Überdruck eingespeist wird.

3. Verfahren nach Anspruch 1,
**dadurch gekennzeichnet, daß** die Luft oder das Gas durch die jeweilige Zelle gesaugt wird.

4. Verfahren zur Kühlung, Wasserstoff- und Aerosolbeseitigung von galvanischen Elementen oder aus diesen verschalteten Batterien während der Zellformation / Batterieformation bzw. zur schnellen Inbetriebsetzung trocken vorgeladener Zellen und Batterien mit einem Gehäuseteil, in dem die galvanischen Elemente angeordnet sind und das zur Aufnahme der Batteriesäure dient,
**dadurch gekennzeichnet, daß** in das Gehäuse in den Gasraum oberhalb der maximalen Säurefüllhöhe Luft, Gas oder Umgebungsluft eingeführt wird und das Mischgas aus Luft, Gas oder Umgebungsluft und den über dem galvanischen Element oder in der Batterie oberhalb der Elektrolytflüssigkeit entstandenen Gasen und Aerosolen abgesaugt und gegebenenfalls gereinigt und gefiltert wird und daß durch die Luftströmung und Absaugung der Gase und Aerosole die Zelle / Batterie gekühlt wird.

5. Vorrichtung zur Durchführung des Verfahrens nach einem der Ansprüche 1 bis 4, insbesondere zur Kühlung und/oder Wasserstoff- und Aerosolbeseitigung von galvanischen Elementen oder aus diesen verschalteten Batterien während der Zellformation / Batterieformation bzw. zur schnellen Inbetriebsetzung trocken vorgeladener Zellen und Batterien oder bei der Aufladung oder Umladung von Batterien mit einem Gehäuseteil, in dem die galvanischen Elektroden oder Plattenblöcke angeordnet sind und das zur Aufnahme der Batteriesäure dient,
**dadurch gekennzeichnet, daß** das Gehäuse (11)im Gasraum (7) oberhalb der maximalen Säurefüllhöhe (10) eine Gas- oder Luftzufuhröffnung (2) und eine Gasabsaugleitung (3) aufweist, wobei die Luftzufuhröffnung(2) der Zuführung von Gas, Luft oder Umgebungsluft dient und die Gasabsaugleitung zur Absaugung der Mischgase, bestehend aus Zuluft und den in der über dem galvanischen Element oder in der Batterie oberhalb der Elektrolytflüssigkeit (14) entstandenen Gasen und Aerosolen dient, so daß durch die erzeugte Luftströmung / Absaugung der Mischgase und Aerosole eine Kühlung der Zelle / Batterie (8) eintritt.

6. Vorrichtung nach Anspruch 5,
**dadurch gekennzeichnet, daß** die Vorrichtung mindestens einen Stopfen mit einer Zuführleitung (2) aufweist, der der Zuführung von Gas, Luft oder Umgebungsluft dient, der an oder auf einer Öffnung (4) des Gehäuseteils (11) befestigt oder befestigbar ist, und mindestens einen weiteren Stopfen mit einer Abführleitung (3), der der Absaugung der in der über dem galvanischen Element oder in der Batterie oberhalb der Elektrolytflüssigkeit (14) entstandenen Mischgase dient, wobei die Mündung der Stopfen oberhalb der maximalen Füllhöhe (10) der jeweiligen Zelle (8) oder der Batterie angeordnet ist.

7. Vorrichtung nach Anspruch 5 oder 6,
**dadurch gekennzeichnet, daß** die beiden Stopfen der Vorrichtung zu einem Stopfen (1) zusammengefaßt sind, der sowohl eine Zuführleitung (2) als auch eine Abführleitung (3) aufweist und in eine Öffnung (4) des Gehäuseteils (11) eingesetzt ist.

8. Vorrichtung nach einem der Ansprüche 5 bis 7,
**dadurch gekennzeichnet, daß** eine oder mehrere der Zuführ- und/oder Abführleitungen (2,3) mit einem Regelkörper, insbesondere mit einem Durchflußregulator, versehen sind.

9. Vorrichtung nach einem der Ansprüche 5 oder 8,
**dadurch gekennzeichnet, daß** zwischen der Zuführleitung (2) und der Abführleitung (3) ein Bypass angeordnet ist, dessen Durchflußquerschnitt mittels eines Durchflußregulators einstellbar ist.

10. Vorrichtung nach einem der Ansprüche 5 bis 9,
**dadurch gekennzeichnet, daß** eine oder mehrere der Zuführ- oder Abführleitungen (2,3) aus einem säureunempfindlichen, vorzugsweise klarsichtigen Kunststoff gebildet ist.

11. Vorrichtung nach einem der Ansprüche 5 bis 10,
**dadurch gekennzeichnet, daß** der Stopfen (1), insbesondere dessen Abführleitung (3), in einem dem Gehäuseteil (11) nahen Außenbereich (15) klarsichtig ausgebildet ist.

12. Vorrichtung nach einem der Ansprüche 5 bis 11,
**dadurch gekennzeichnet, daß** die Abführleitung (3) an eine Abgasabsaugungs- und eine Abgasreinigungsanlage angeschlossen ist.

13. Vorrichtung nach einem der Ansprüche 5 bis 12,
**dadurch gekennzeichnet, daß** zwischen der gehäuseseitigen Mündung der Zuführleitung (2) und Abführleitung (3) ein Trennteil, insbesondere eine Trennwand (6), vorgesehen ist.

14. Vorrichtung nach einem der Ansprüche 5 bis 13,
**dadurch gekennzeichnet, daß** das Gehäuseteil (11) in seinem von den Polen (12,13) der Batterie durchgriffenen Deckel Diagnoseöffnungen (4) im Bereich der einzelnen Zellen (8) aufweist, und daß die Zuführ- und Abführleitung (2,3) aufweisende Stopfen (1) in die Diagnoseöffnungen (4) eingesetzt sind.

15. Vorrichtung nach einem der Ansprüche 5 bis 14,
**dadurch gekennzeichnet, daß** an einer Haltevorrichtung eine Anzahl von Stopfen (1) gehaltert sind, die bezüglich der Anzahl und Anordnung der Anzahl und Anordnung der Diagnoseöffnungen (4) einer Batterie entsprechen, und daß die Haltevorrichtung auf die Batterie aufsetzbar ist, so daß die Stopfen (1) in die Diagnoseöffnungen (4) eingreifen.

16. Vorrichtung nach einem der Ansprüche 5 bis 15,
**dadurch gekennzeichnet, daß** die Abführleitungen (3) der Stopfen (1) an eine Sammelleitung angeschlossen sind, die mit einer Absaugvorrichtung gekoppelt ist.

17. Vorrichtung nach einem der Ansprüche 5 bis 16,
**dadurch gekennzeichnet, daß** der Stopfen (1) aus einem ringförmigen Unterteil (17) und einem stutzenartigen, in das Unterteil (17) einsteckbaren Oberteil (18) besteht, wobei im Unterteil (17) diametral die Trenn-wand (6) angeordnet ist, die sich parallel zur Ringachse des Unterteils (17) einerseits über die gehäuseinnenliegende Mündung des Unterteils (17) vorragend und andererseits bis zum in das Unterteil (17) eingesteckten Ende des Oberteils (18) erstreckt, daß das Oberteil (18) außermittig einerseits einen Stutzen (2) zum Anschluß der Abführleitung (3) und andererseits die Öffnung (21) aufweist, die als Zuführleitung (2) dient, und daß das Oberteil (18) der drehbar im Unterteil (17) gehaltert ist.
